# EUROPEAN PATENT APPLICATION

(11) **EP 2 804 301 A1**
(43) Date of publication of application: **19.11.2014**
(21) Application number: 13002509.1
(22) Date of filing: 13.05.2013
(51) Int. Cl.: H02M 1/34, H02J 9/06

(54) **Power conversion circuit for use in an uninterruptable power supply, and uninterruptable power supply including the power conversion circuit**

(71) Applicant: Vincotech GmbH, 82008 Unterhaching (DE)
(72) Inventor: Frisch, Michael, 82008 Unterhaching (DE); Temesi, Ernö, 2094 Nagykovácsi (HU)
(74) Representative: Grünecker, Kinkeldey, Stockmair & Schwanhäusser

(57) **Abstract**

A power conversion circuit (1000) comprises at least one converter module (1100) comprising a first (1110) and a second (1120) step-up converter for converting a rectified AC voltage and/or a DC voltage into a DC supply voltage; an inverter module (1330) with a three-level inverter circuit converting the DC supply voltage into an AC voltage (line out); and an intermediate module (1200) connecting the converter module to the inverter module.

The intermediate module (1200) additionally includes snubbers (1130,1140, 1310,1320) comprising series connections of a diode and a capacitor collecting transient energy of parasitic inductances. A first and second step-down converter (1210,1220) convert the resulting voltage into the DC power supply voltage providing that voltage to the input terminals of the converter module.

Maybe used in an uninterruptible power supply and shall improve the effectiveness.

## Description

The present invention relates to a power conversion circuit for connecting an AC power supply and a DC power supply within an uninterruptible power supply and relates to an uninterruptible power supply including the power conversion circuit.

Uninterruptible power supplies are commonly used for improving the reliability of computer hardware. With a growing use of computer hardware in remote technical fields, for instance, industrial facilities, medical appliances and scientific arrangements, the demand for uninterruptible power supplies is steadily increasing. In this respect, the present invention sets out to meet the requirement for high flexibility in the configuration of the power conversion circuit for use in the uninterruptible power supplies.

Industrial, medical and scientific appliances may rely on different types of AC voltage, namely on single-phase AC voltage or on three-phase AC voltage. Moreover, depending on the amount of power to be consumed in the appliance the usage of three-phase AC voltage is desirable in view of a reduction in line losses or in view of design considerations, namely the reduction of conductor material to transmit electrical power. Accordingly, the design of uninterruptible power supplies cannot be limited to only one of the different types of AC voltages such that a flexible design is required for the underlying power conversion circuit.

Further, challenges in the development of uninterruptible power supplies have always been lying in the improvement of efficiency of the DC power supply. Nevertheless, with a widespread application of uninterruptible power supplies, this challenge is becoming more and more important. In this respect, the present invention sets out to meet the demands for a highly efficient power conversion circuit for use in an uninterruptible power supply.

Specifically, uninterruptible power supplies with rechargeable batteries of smaller capacity as DC power supplies heavily depend on the charging capabilities of the power conversion circuit and on the switching efficiency of the power conversion circuit during normal operation. Rechargeable batteries of smaller capacity are specifically advantageous in view of the overall size and weight reduction of the uninterruptible power supply. Accordingly, the design of uninterruptible power supplies has to also take account of the efficiency of the power conversion circuit for use within the uninterruptible power supply.

A contribution to the reduction of switching losses in converter modules has been made in European Patent Application EP 11 004 045.8 (published as EP 2525491 A1). Specifically, this application sets out to take advantage of parasitic inductances in different topologies of switching regulators for power modules.

In view of the above, it is an object of the invention to suggest a power conversion circuit that has a flexible design so as to allow usage thereof in an uninterruptible power supply for single-phase AC voltage or on three-phase AC voltage.

It is a further object of the invention to suggest a power conversion circuit for use in an uninterruptible power supply with an improved efficiency, namely which enhances feeding-back of energy into the DC power supply.

At least one of the above mentioned objects is solved by the subject-matter of the independent claims. Advantageous embodiments are subject to the dependent claims.

According to a first aspect of the invention, a power conversion circuit is proposed that is for use in an Uninterruptible power supply. The power conversion circuit includes three different type modules, a converter circuit module, an intermediate circuit module and an inverter circuit module.

The converter circuit module is configured for receiving an AC voltage from an AC power supply and for receiving a DC voltage from a DC power supply. The positive and the negative part of at least one of both voltages are up-converted into a first and a second DC supply voltage.

The intermediate circuit module is configured to forward the DC supply voltage from the converter circuit module to the inverter circuit module. Additionally, the intermediate circuit module includes a converter circuit for down-converting and supplying a voltage to the DC power supply.

The inverter circuit module is configured to receive the first and second DC supply voltage from the converter circuit module for converting same DC supply voltage into an AC voltage to be output at the respective output terminal.

Due to the realization of the power conversion circuit as separate modules, the connections in-between the converter circuit module, the intermediate circuit module and the inverter circuit module includes parasitic inductances. Moreover, these parasitic inductances result in the converter circuit module and the inverter circuit module accumulating transient energy.

Specifically, the converter circuit module and the inverter circuit module include series circuits composed of a diode and a capacitor for storing the transient energy resulting from the respective parasitic inductance.

The idea underlying the present invention is that the intermediate circuit module uses this transient energy in addition to the DC energy stored on the capacitors of the series circuits for down-conversion into feedback energy and for feedback into the DC power supply. In other words, the intermediate circuit module includes a first and second step-down converter that makes use of voltage corresponding to the transient energy stored on the capacitors of the series circuits for down-converting and supplying same to the DC power supply's input terminals.

Consequently, the power conversion circuit of the present invention improves efficiency by the first and second down-converters of the intermediate circuit module using the transient energy for feed-back into the DC power supply.

According to one exemplary embodiment in line with the first aspect of the invention, a power conversion circuit for use in an uninterruptible power supply is proposed. The power conversion circuit comprises at least one converter circuit module, an intermediate circuit module, and at least one inverter circuit module.

The at least one converter circuit module comprises a first input terminal for connecting a phase terminal of an AC power supply; a second input terminal for connecting a neutral terminal of the AC power supply; and a third and fourth input terminal for respectively connecting one of a positive and negative terminal of a DC power supply; and a first and a second step-up converter for up-converting one of a positive and negative voltage into one of a constant first and second DC-supply voltage having one of a pre-determined positive and negative voltage level, respectively. The positive and negative voltage is received via the first input terminal as one of a positive and negative part of an AC voltage and/or via the third and fourth input terminal as one of a positive and negative part of a DC voltage, respectively.

The at least one converter circuit module further comprises a first and a second output terminal connected to one of the first and second step-up converter for providing one of the up-converted first and second DC-supply voltage, respectively; and a third output terminal for providing a neutral voltage supplied via the second input terminal. The at least one converter circuit module furthermore comprises a first and a second series circuit each composed of a diode and a capacitor, the first and the second series circuit being respectively connected to one of the first and second output terminal and both to the third output terminal; wherein the intermediate node of the first and second series circuit is connected to one of a fourth and a fifth output terminal, respectively.

The at least one inverter circuit module comprises a third and a fourth series circuit each composed of a diode and a capacitor, the third and fourth series circuit being respectively connected to one of a first and second input terminal and both to a third input terminal; wherein the intermediate node of the third and fourth series circuit is connected to one of a fourth and fifth input terminal, respectively. The at least one inverter circuit module further comprises a three-level inverter circuit connected to the first, second and third input terminal for converting the respective up-converted first and second DC-supply voltage and the neutral voltage into an AC voltage and for outputting the converted AC voltage to an output terminal.

The intermediate circuit module comprises a first, second, third, fourth and fifth conductor path for connecting one of the first, second, third, fourth and fifth output terminal of the at least one converter circuit module to one of the first, second, third, fourth and fifth input terminals of the at least one inverter circuit module, respectively. The intermediate circuit module further comprises a first and second storage capacitor respectively connected to one of the first and second conductor path and both to the third conductor path.

Each of the connections between the at least one converter circuit module, the intermediate circuit module and the at least one inverter circuit module includes a parasitic inductance. Further, the first, second, third and fourth series circuit are configured such that each of the capacitors thereof temporarily stores, in the capacitor, DC-energy corresponding to the respective up-converted first and second DC-supply voltage, and temporarily stores, in the capacitor, transient energy resulting from the respective of the parasitic inductances.

Furthermore, the intermediate circuit module further comprises a first and a second step-down converter connected to one of the fourth and fifth conductor path for down-converting a voltage corresponding to the transient energy temporarily stored on one of the capacitors of the first, second, third and fourth series circuit into one of a first and second DC power supply voltage having one of a pre-determined positive and negative voltage level, respectively; and connected to one of the third and fourth input terminal of the at least one converter circuit module for supplying one of the first and second DC power supply voltage into the DC power supply, respectively.

According to a more detailed embodiment, the first and the second step-down converter of the power conversion circuit is further connected via one of a first and a second diode to one of the first and second conductor path, respectively, for supplying one of the first and second DC power supply voltage into one of the first and second storage capacitor.

According to another more detailed embodiment, the first and the second step-down converter of the power conversion circuit is connected via one of a first and a second switching element to one of the third and fourth input terminal of the at least one converter circuit module, respectively, for enabling/disabling the supply of one of the first and second DC power supply voltage into the DC power supply.

According to a further more detailed embodiment, the first and the second switch of the power conversion circuit is configured to connect one of the first and second step-down converter either to one of the third and fourth input terminal or to one of the first and second conductor path, respectively.

According to yet another more detailed embodiment, the third and fourth input terminal of the converter circuit module is connected via one of a third and a fourth switching element to one of the first and second step-up converter, respectively.

According to an even more detailed embodiment, each of the first to fourth switching element is realized as electromagnetic relay or as semiconductor switching element including one of a silicon controlled rectifier, SCR, a thyristor, a MOSFET, and an IGBT.

According to another more detailed embodiment, the three-level inverter circuit of the power conversion circuit includes: a positive voltage switching element connected to the first input terminal and to the output terminal of the inverter circuit module for providing a positive voltage at the output terminal; a negative voltage switching element connected to the second input terminal and to the output terminal of the inverter circuit module for providing a negative voltage at the output terminal ; and a neutral point switching circuit coupled between the third input terminal and the output terminal of the inverter circuit module for providing a neutral voltage at the output terminal.

According to a further more detailed embodiment, the power conversion circuit comprises three converter circuit modules, wherein: the first input terminal of each of the three converter circuit modules is for connecting a different phase terminal of a three-phase AC power supply; the second input terminal of each of the three converter circuit modules is for connecting a neutral terminal of the three-phase AC power supply; the third and the fourth input terminal of each of the three converter circuit modules are for respectively connecting one of a positive and negative terminal of the DC power supply; and the first, second, third, fourth and fifth output terminal of each of the three converter circuit modules respectively connect the first, second, third, fourth and fifth conductor path of the intermediate circuit module.

The power conversion circuit further comprises three inverter circuit modules, wherein: the first, second, third, fourth and fifth input terminal of each of the inverter circuit modules respectively connect the first, second, third, fourth and fifth conductor path of the intermediate circuit module; and the three-level inverter circuit of each of the inverter circuit modules is configured for converting the respective up-converted first and second DC-supply voltage and the neutral voltage into one of three different-phase AC voltages, respectively; and for outputting the converted one of the three different-phase AC voltages to the respective output terminal of each of the inverter circuit modules.

According to another exemplary embodiment in line with the first aspect of the invention, an uninterruptible power supply, comprising: a power conversion circuit according to one of the previously described embodiments, and a DC power supply; wherein the positive and negative terminal of the DC power supply respectively connect the third and fourth input terminal of each of the at least one converter circuit module.

According to a more detailed embodiment, the DC power supply of the uninterruptible power supply is realized as a rechargeable battery.

The accompanying drawings are incorporated into the specification and form a part of the specification to illustrate several embodiments of the present invention. These drawings, together with the description, serve to explain the principles of the invention. The drawings are merely for the purpose of illustrating the preferred and alternative examples of how the invention can be made and used, and are not to be construed as limiting the invention to only the illustrated and described embodiments.

Furthermore, several aspects of the embodiments may form - individually or in different combinations - solutions according to the present invention. Further features and advantages will be become apparent from the following more particular description of the various embodiments of the invention as illustrated in the accompanying drawings, in which like references refer to like elements, and wherein:
- **Fig. 1**: shows a schematic circuit diagram of a power conversion circuit 1000 for use in an uninterruptible power supply according to the first embodiment;
- **Fig. 2**: shows a circuit diagram of the power conversion circuit 1000 for use in an uninterruptible power supply according to the first embodiment;
- **Fig. 3**: shows an circuit diagram of a power conversion circuit 2000 for use in an uninterruptible power supply according to the second embodiment; and
- **Fig. 4**: shows a circuit diagram of a power conversion circuit 3000 for use in an uninterruptible power supply, according to the third embodiment.

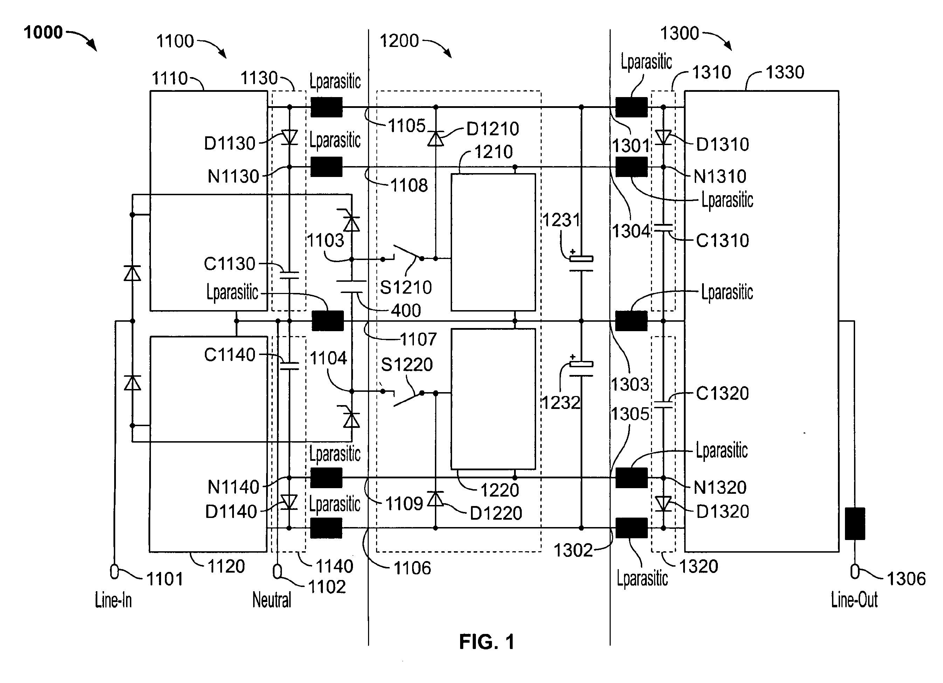

Referring now to Fig. 1, a schematic circuit diagram of a power conversion circuit 1000 for use in an uninterruptible power supply, UPS, according to the first embodiment is shown. The power conversion circuit 1000 of the first embodiment includes three modules, namely a converter circuit module 1100, an intermediate circuit module 1200 and an inverter circuit module 1300. The three modules are connected to each other via respective input/output terminals and in-combination provide for the advantage of minimizing switching losses during operation within an uninterruptible power supply.

For completeness, the schematic circuit diagram of the power conversion circuit 1000 is illustrated together with a DC power supply 400 that may be realized, for instance, as a battery, an electrolytic capacitor, or any other DC storage means. Nevertheless, it shall be emphasized that the DC power supply 400 is not part of the power conversion circuit 1000.

As will become apparent from the following, the advantage of minimizing switching losses is achieved with a minimal amount of extra circuitry. Specifically, the step-down converters 1210 and 1220 of the intermediate circuit module 1200 are configured to allow transferring DC energy (i.e. active energy) into the DC power supply 400 as well as to allow regenerating transient energy (i.e. reactive energy) resulting from parasitic inductances for improving the overall efficiency of the power conversion circuit 1000.

The converter circuit module 1100 is configured for connecting an AC power supply and a DC power supply 400. In more detail, the converter circuit module 1100 receives a single-phase AC voltage via a first input terminal 1101, a neutral voltage (i.e. ground voltage) via a second input terminal 1102, and a DC voltage (i.e. positive and negative voltage) via a third and fourth input terminal 1103 and 1104.

Accordingly, the first and second input terminals 1101 and 1102 are adapted to connect the AC power supply and the third and fourth input terminals 1103 and 1104 are configured to connect the DC power supply 400.

Further, the converter circuit module 1100 comprises a first and a second step-up converter 1110 and 1120 as are commonly known to a skilled person in the art. The first step-up converter 1110 is configured for up-converting a positive voltage, supplied as positive part of the single-phase AC voltage (i.e. positive half-wave of the AC voltage) and/or supplied as a positive part of the DC voltage, into a constant DC supply voltage having a pre-determined positive voltage level. Similarly, the second step-up converter 1120 is configured for up-converting a negative voltage, supplied as negative part of the single-phase AC voltage (i.e. negative half-wave of the AC voltage) and/or supplied as a negative part of the DC voltage, into a constant DC supply voltage having a pre-determined negative voltage level. Consequently, the first and second step-up converter 1110 and 1120 are configured to operate simultaneously/alternatively based on an AC voltage and/or a DC voltage.

For example, even when the supply of AC voltage to the converter circuit module 1100 is interrupted, the first and second step-up converter 1110 and 1120 continue up-converting the respective one of the positive and negative voltage, namely based on the respective positive and negative part of the voltage supplied by the DC power supply, only, and not based on the respective positive and negative part of the single-phase AC voltage supplied by the AC power supply.

Also for example, when the peak voltage level of the AC voltage supplied to the converter circuit module 1100 becomes smaller than a nominal peak voltage level, the first and second step-up converter 1110 and 1120 continue up-converting the respective one of the positive and negative voltage, namely based on the respective positive and negative part of the voltage supplied by the DC power supply and the respective positive and negative part of the single-phase AC voltage supplied by the AC power supply.

According to a more detailed example of the power conversion circuit 1000, the converter circuit module 1100 additionally includes a first and a second switching element S1110 and S1120 respectively placed in-between one of the third and fourth input terminal 1103 and 1104 and one of the inputs of one of the first and second step-up converter 1110 and 1120. In this respect, the first and second switching element S1110 and S1120 enables respectively controlling the supply of the positive and negative voltage based on the DC power supply 400.

In an advantageous realization of the more detailed example, the first and the second switching element S1110 and S1120 of the converter circuit module 1100 are implemented as a first and a second thyristor. Specifically, for enabling a current to flow from an anode to a cathode of a thyristor, an initial trigger current has to be supplied to the gate of the thyristor. Thereafter, the thyristor continues to conduct as long as same is forward biased (i.e. positive voltage across the anode to the cathode of the thyristor). Consequently, the thyristor dispenses with the need for a constant holding current. This behavior of the thyristor is beneficial for the converter circuit module 1110 in that interruptions of the AC voltage supply are assumed to be of considerable time-length and occur on an infrequent basis.

Further, the first and second step-up converter 1110 and 1120 of the converter circuit module 1100 are configured to supply one of the up-converted positive and negative constant DC supply voltages to one of a first and second output terminal 1105 and 1106, respectively. A third output terminal 1107 of the converter circuit module 1100 is provided with the neutral voltage received via the second input terminal 1102.

The first, second and third output terminals 1105, 1106 and 1107 of the converter circuit module 1100 enable connecting the module 1100 to another circuit module, namely the intermediate circuit module 1200.

It has proven advantageous to realize the converter circuit module 1100, the intermediate circuit module 1200 and the inverter circuit module 1300 as a separate power module so as to allow for a flexible configuration, namely for re-using same converter circuit modules 1100 and same inverter circuit modules 1300 in a single-phase power conversion circuit as described in connection with the first embodiment as well as in a three-phase power conversion circuit as will be described in connection with the third embodiment.

Additionally, the separate module design of the converter circuit module 1100 and of the inverter circuit module 1300 is also advantageous in view of thermal control. Moreover, a substantial amount of heat dissipation of the converter circuit module 1100 and of the inverter circuit module 1300 requires careful thermal design and placement within the power conversion circuit. In this respect, different thermal precaution measures can be taken for the separate converter circuit module 1100, intermediate circuit module 1200 and inverter circuit module 1300.

Nevertheless, due to a separate module design of the power conversion circuit, the converter circuit module 1100 is electrically connected to the intermediate circuit module 1200, and the intermediate circuit module 1200 is electrically connected to the inverter circuit module 1300. The connections in-between the separate modules act as a parasitic inductance indicated as a "parasitic inductor" titled *L_{parasitic}* in the figures.

The indicated "parasitic inductors" of the figures should, however, only hint towards parasitic inductances in the power conversion circuit. In other words, the "parasitic inductors" in the schematic circuit diagram of the power conversion circuit do not correspond to an electrical component (i.e. inductor) with a fixed position but results from various factors and may be assumed inherent to the connections in-between the separate modules of the power conversion circuit.

For up-converting a positive or negative voltage, each of the first and the second step-up converters 1110 and 1120 of the power conversion circuit 1000 includes a switching element for alternatively driving and not-driving a current in the direction of the respective first and the second output terminal 1105 and 1106. The current driven by the first and second step-up converters 1110 and 1120 is adversely influence by the parasitic inductances at the respective first and second output terminal 1104 and 1106.

In particular, an inductance resists a sudden change of an electric current and hence delays the current with respect to the voltage. This also holds true for the parasitic inductances. Accordingly, the parasitic inductance at the respective first and second output terminal 1105 and 1105 adversely influences the current driving capabilities of the first and the second st6p-up converters 1110 and 1120, in particular the switching OFF behavior of a switching element in the respective first and second step-up converter 1110 and 1120.

In more detail, when the switching element of the first and the second step-up converter 1110 and 1120 is controlled to switch to an OFF state, the respective first and second step-up converter 1110 and 1120 starts driving a current in the direction of one of the first and second output terminal 1105 and 1106. However, the parasitic inductance at the respective first and second output terminal 1105 and 1106 resists a sudden change in the current driven by the first and second step-up converter 1110 and 1120, and hence delays the current with respect to the voltage.

Due to the parasitic inductance at the first and second output terminal 1105 and 1106 delaying the current driven by the respective first and second step-up converter 1110 and 1120 with respect to the voltage, the parasitic inductance causes transient energy to be generated, which would normally prevent from fast switching speeds in the respective step-up converter 1110 and 1120 or would result in high switching losses at the switching elements of the respective first or second step-up converters 1110 and 1120.

In order to regenerate the transient energy resulting from the parasitic inductances, the converter circuit module 1100 includes a first and a second series circuit 1130 and 1140 each composed of a diode D1130 / D1140 and a capacitor C1130 / C1140. The first and second series circuit 1130 and 1140 are configured to allow temporarily storing, in the respective capacitor C1130 / C1140 of one of the first and second series circuit 1130 and 1140, the transient energy resulting from the parasitic inductance at one of the first and second output terminal 1105 and 1106, respectively.

The first series circuit 1130 is connected to the first output terminal 1105 and to the third output terminal 1107. The second series circuit 1140 is connected to the second output terminal 1106 and to the third output terminal 1107.

In a more detailed example of the converter circuit module 1100, the respective connection between one of the first and second step-up converter 1110 and 1120 and one of the first and second series circuit 1130 and 1140 at the first, second or third output terminal 1105, 1106 and 1107 is realized in a low-inductive manner. For this purpose, the connection line between the first and second step-up converter 1110 and 1120 and the respective first and second series circuit 1130 and 1140 may be implemented with different dimensions (e.g. wider cross-section) and/or with a different material (e.g. higher electrical conductivity).

The diode D1130 of the first series circuit 1130 is connected with its anode to the first output terminal 1105 and with its cathode to the intermediate node N1130 of the first series circuit 1130. The diode D1140 of the second series circuit 1140 is connected with its cathode to the second output terminal 1106 and with its anode to the intermediate node N1140 of the second series circuit 1140.

Accordingly, when the first and second step-up converter 1110 and 1120 start driving a current in the direction of first and second output terminal 1105 and 1106, and the parasitic inductance at the respective first and second output terminal 1105 and 1106 causes transient energy to be generated.

Then, the capacitor of the first and second series circuit 1130 and 1140 temporarily stores the transient energy resulting from the parasitic inductance at the first or second output terminal 1105 and 1106 on top of the stored DC energy corresponding to the respective predetermined first and second DC supply voltage provided by the first and second step-up converter 1110 and 1120.

In more detail, a first and a second storage capacitor 1231 and 1232 of the intermediate circuit module 1200 is connected in parallel to the respective first and second series circuit 1130 and 1140. Consequently, the respective capacitor of the first and second series circuit 1130 and 1140 stores energy corresponding to the respective predetermined first and second DC supply voltage up-converted by the first and second step-up converter 1110 and 1120.

In this respect, the voltage level across the capacitor of the first and second series circuit 1130 and 1140 is at least equal to the respective predetermined positive and negative voltage level provided by the first and second step-up converter 1110 and 1120. Additionally, the capacitor of the first and second series circuit 1130 and 1140 temporarily stores the respective transient energy resulting from the parasitic inductance such that the voltage level across the respective capacitor may become substantially higher than the respective predetermined positive and negative voltage level.

For regenerating the transient energy temporarily stored on the capacitor of the first and second series circuit 1130 and 1140; the intermediate node N1130 and N1140 of the first and second series circuit 1130 and 1140 is connected to one of a fourth and a fifth output terminal 1108 and 1109, respectively.

The intermediate circuit module 1200 is configured for connecting the converter circuit module 1100, namely the first to fifth output terminals 1105 - 1109 of the converter circuit module 1100. For this purpose, the intermediate circuit module 1200 includes a first to fifth input terminal 1201' - 1205' respectively connected to one of the first to fifth output terminals 1105 - 1109 of the converter circuit module 1100.

In more detail, the first to fifth input terminal 1201' - 1205' of the intermediate circuit module 1200 respectively merge into (i.e. opens into) one of a first to a fifth conductor path 1201 - 1205 such that one of the first to fifth conductor path 1201 - 1205 is electrically connected to one of the first to fifth output terminals 1105 - 1109 of the converter circuit module 1100.

Further, the first to fifth conductor path 1201 - 1205 of the intermediate circuit module 1200 respectively merge into (i.e. end in) one of a first to fifth output terminal 1201" - 1205" for connecting the inverter circuit module 1300.

The first and second conductor path 1201 and 1202 of the intermediate circuit module 1200 is provided via the respective one of the first and the second input terminal 1201' - 1205' with the up-converted first and second constant DC supply voltage supplied by the converter circuit module 1100. At the same time, the third conductor path 1203 of the intermediate circuit module 1200 is provided via the respective third input terminal 1203' with a neutral voltage supplied by the converter circuit module 1100.

For storing the up-converted first and second constant DC supply voltage supplied by the converter circuit module 1200, the intermediate circuit module 1200 includes a first and second storage capacitor 1231 and 1232 being respectively connected to one of the first and second conductor path 1201 and 1202 and both to the third conductor path 1203.

Further, the fourth and fifth conductor path 1204 and 1205 of the intermediate circuit module 1200 is provided via the respective fourth and fifth input terminal 1204' and 1205' with a voltage corresponding to the energy temporarily stored on the capacitor of the respective first and second series circuit 1130 and 1140 of the converter circuit module 1100 and with a voltage corresponding to the energy temporarily stored on the capacitor of the respective third and fourth series circuit 1310 and 1320 of the inverter circuit module 1300, as will be explained in more detail below.

Due to the transient energy resulting from the parasitic inductance at the first and second output terminal 1101 and 1102 of the converter circuit module 1100, the voltage level provided via the respective fourth and fifth conductor path 1204 and 1205 is at least equal to respective predetermined positive and negative voltage level of the first and second DC supply voltage supplied by the first and second step-up converter 1110 and provided via the first and second conductor path 1201 and 1202 of the intermediate circuit module 1200.

In other words, due to the transient energy resulting from the parasitic inductance, the capacitors of the first and second series circuit 1130 and 1140 of the converter circuit module 1100 temporarily store energy amounting to a voltage level equal to or higher than the voltage level across the storage capacitors 1231 and 1232 of the intermediate circuit module 1200.

Similarly, due to a transient energy resulting from the parasitic inductance, the capacitors of the third and fourth series circuit 1310 and 1320 of the inverter circuit module 1300 temporarily store energy amounting to a voltage level equal to or higher than the voltage level across the storage capacitors 1231 and 1232 of the intermediate circuit module 1200.

Further, when the intermediate circuit 1200 discharges the capacitor of one of the first and second series circuit 1130 and 1140 as well as the capacitor of one of the third and fourth series circuit 1310 and 1320 via the respective one of the fourth and fifth conductor path 1204 and 1205, the respective diodes of the first, second, third and fourth series circuit 1130, 1140, 1310 and 1320 allow for an equalization of potential via the first and second conductor path 1201 and 1202 between the first and second storage capacitors 1231 and 1232 and the respectively capacitors thereof.

In this respect, a current may flow from the first storage capacitor 1231 of the intermediate circuit module 1200 to the capacitor of the first and third series circuit 1130 and 1310 of the converter circuit module 1100 and the inverter circuit module 1300 such that the voltage level across the first storage capacitor 1231 corresponds to the voltage level across capacitor of the first and third series circuit 1130 and 1310.

Similarly, a current may flow from the second storage capacitor 1232 of the intermediate circuit module 1200 to the capacitor of the second and fourth series circuit 1140 and 1320 of the converter circuit module 1100 and the inverter circuit module 1300 such that the voltage level across the second storage capacitor 1232 corresponds to the voltage level across capacitor of the first and third series circuit 1140 and 1320.

The inverter circuit module 1300 is configured to connect to the intermediate circuit module 1200, namely to the first to fifth output terminals 1201" - 1205" of the intermediate circuit module 1200. For this purpose, the three-level inverter circuit includes a first to fifth input terminal 1301 - 1305 respectively connected to one of the first to fifth output terminals 1201" - 1205" of the intermediate circuit module 1200. The connections in-between the inverter circuit module 1300 and the intermediate circuit module 1200 act also as a parasitic inductance.

Accordingly, the first and second input terminals 1301 and 1302 are provided via the respective first and second conductor path 1201 and 1202 of the intermediate circuit module 1200 with the up-converted first and second constant DC supply voltage supplied by the converter circuit module 1100. At the same time, the third input terminal 1303 is provided via the third conductor path 1203 with a neutral voltage supplied with by the converter circuit module 1100.

Further, the inverter circuit module 1300 includes a three-level inverter circuit 1330 for providing an AC voltage as is commonly known to a skilled person in the art. The three-level inverter circuit 1330 is configured for converting the three voltage levels provided via the first, second and third input terminals 1301, 1302 and 1303 into an AC voltage. This converted AC voltage is output by an output terminal 1306 of the inverter circuit module 1300.

For converting the three voltage levels into an AC voltage, the three-level inverter circuit 1330 includes switching elements for alternately driving and non-driving current from the first, second and third input terminals 1301, 1302 and 1303 in the direction of the output terminal 1306. Specifically, due to the parasitic inductances at the respective first and second input terminals 1301 and 1302, the switching behavior of the switching elements of the three-level inverter circuit 1330 is adversely influenced.

In more detail, when a switching element of the three-level inverter circuit 1330 is controlled to switch to an OFF state, and current stops flowing via the first and second input terminals 1301 and 1302 into the three-level inverter circuit 1330, the parasitic inductance will release energy contained in the magnetic field of the parasitic inductance. The parasitic inductance forces a current to flow in the direction of the three-level inverter circuit 1330, namely of the switching element of the three-level inverter circuit 1330, and hence causes transient energy to be generated, which would normally prevent from the switching element's immediate turn OFF

In order to regenerate the transient energy resulting from the parasitic inductances, the inverter circuit module 1300 additionally includes a third and a fourth series circuit 1310 and 1320, each composed of a diode D1310 / D1320 and a capacitor C1310 / C1320. The third and fourth series circuit 1310 and 1320 are configured to allow temporarily storing, in the respective capacitor C1310 / C1320 of one of the third and fourth series circuit 1310 and 1320, the transient energy resulting from the parasitic inductance at one of the first and second input terminal 1301 and 1302, respectively.

The third series circuit 1310 is connected to the first input terminal 1301 and to the third input terminal 1303. The second series circuit 1320 is connected to the second output terminal 1302 and to the third output terminal 1303.

Specifically, the diode D1310 of the third series circuit 1310 is connected with its anode to the first input terminal 1301 and with its cathode to the intermediate node N1310 of the third series circuit 1310. The diode D1320 of the fourth series circuit 1320 is connected with its cathode to the second input terminal 1302 and with its anode to the intermediate node N1320 of the fourth series circuit1320.

Accordingly, when a switching element of the three-level inverter circuit 1330 is switched OFF, and current stops flowing via one of the first and second input terminals 1301 and 1302 into the three-level inverter circuit 1330, the parasitic inductance at the first and second input terminal 1301 and 1302 causes transient energy to be generated, namely the parasitic inductance induces (i.e. forces) a current to flow in the direction of the three-level inverter circuit 1330.

Then, the capacitor of the third and fourth series circuit 1310 and 1320 temporarily stores the transient energy resulting from the parasitic inductance at the first or second input terminal 1301 and 1302 on top of the stored DC energy corresponding to the respective predetermined first and second DC supply voltage provided by the first and second step-up converter 1110 and 1120.

In more detail, the first and the second storage capacitor 1231 and 1232 of the intermediate circuit module 1200 is connected in parallel to the respective third and fourth series circuit 1310 and 1320. Consequently, the respective capacitor of the third and fourth series circuit 1310 and 1320 stores DC energy corresponding to the respective predetermined first and second DC supply voltage up-converted by the first and second step-up converter 1110 and 1120.

In this respect, the voltage level across the capacitor of the third and fourth series circuit 1310 and 1320 is at least equal to the respective predetermined positive and negative voltage level provided by the first and second step-up converter 1110 and 1120. Additionally, the capacitor of the third and fourth series circuit 1310 and 1320 temporarily stores the respective transient energy resulting from the parasitic inductance such that the voltage level across the respective capacitor may become substantially higher than the respective predetermined positive and negative voltage level.

For regenerating the transient energy resulting from the parasitic inductances, the intermediate node N1310 and N1320 of the third and fourth series circuit 1310 and 1320 is connected to one of the fourth and fifth input terminal 1304 and 1305, respectively. Accordingly, the intermediate node N1310 and N1320 of the third and fourth series circuit 1310 and 1320 of the inverter circuit module 1300 is connected via one of the fourth and fifth conductor path 1204 and 1205 of the intermediate circuit module 1200 to one of the intermediate node N1130 and N1140, respectively.

In addition to what has been said before, the intermediate circuit module 1200 further includes a first and a second step-down converter 1210 and 1220. The first and second step-down converters 1210 and 1220 are both configured for two functionalities, namely, first, for feeding-back energy into the DC power supply and, second, for feeding-back energy into the respective storage capacitor C1231 and C1232.

Regarding the first functionality, the first and second step-down converter 1210 and 1220 allow regenerating energy, in particular transient energy resulting from the parasitic inductances, for charging a battery connected as DC power supply. The power conversion circuit 1000 allows connecting an AC power supply and a DC power supply for providing an AC voltage at the output. In case of an interruption of the supply of AC power, the DC power supply is used for supplying the AC voltage at the output. After such an interruption, the first and second step-down converter 1210 and 1220 enable feeding-back energy into the input terminals 1103 and 1104 for charging the DC power supply.

Regarding the second functionality, the first and second step-down converter 1210 and 1220 allows regenerating energy, in particular the transient energy resulting from the parasitic inductances, for charging the respective storage capacitor C1231 and C1232. The capacitor of the first to fourth series circuit 1130, 1140, 1310 and 1320 allow temporarily storing DC energy and, additionally, the transient energy. Therefore, the voltage level across the respective capacitor C1130, C1140, C1310 and C1320 is at least equal to the respective predetermined positive and negative voltage level of the DC supply voltage. The first and second step-down converter 1210 and 1220 allow feeding-back the transient energy into the first and second storage capacitor 1231 and 1232 for improving the switching efficiency.

In particular, the parasitic inductances are inherent to the inter-connections in-between the separate modules and a resulting transient energy would, hence, would be considered unavoidable switching losses. The capacitors of the first to fourth series circuit 1130, 1140, 1310 and 1320 allow storing the transient energy, and the diodes thereof prevent the respective capacitor from discharging, i.e. prevent from a drain current discharging the transient energy from the respective capacitor. By the first and second step-down converter 1110 and 1120 feeding-back the transient energy into the first and second storage capacitor 1231 and 1232 allow improving the overall efficiency of the power conversion circuit 1000.

In more detail, the first step-down converter 1210 is configured for down-converting energy temporarily stored on the capacitor C1130 of the first series circuit 1130 of the converter circuit module 1100 and stored on the capacitor C1310 of the third series circuit 1310 of the inverter circuit module 1300 into a positive DC power supply voltage having a pre-determined first voltage level.

The energy stored on the capacitors C1130 and C1310 may be DC energy corresponding to the first DC supply voltage from the first step-up converter 1110 or may be transient energy resulting from the parasitic inductance at the first output terminal 1105 and/or at the first input terminal 1301.

Similarly, the second step-down converter 1220 is configured for down-converting energy temporarily stored on the capacitor C1140 of the second series circuit 1140 of the converter circuit module 1100 and/or stored on the capacitor C1320 of the fourth series circuit 1320 of the inverter circuit module 1300 into a negative DC power supply voltage having a pre-determined second voltage level.

The energy stored on the capacitors C1140 and C1320 may be DC energy corresponding to the second DC supply voltage from the second step-up converter 1120 or may be transient energy resulting from the parasitic inductance at the second output terminal 1106 and/or at the second input terminal 1302.

For this purpose the first and second step-down converter 1210 and 1220 is respectively connected to one of the fourth and fifth conductor path 1204 and 1205 so as to receive a voltage level corresponding to the energy temporarily stored either on the capacitor C1130 of the first series circuit 1130 and the capacitor C1310 of the third series circuit 1310 or on the capacitor C1140 of the second series circuit 1140 and the capacitor C1320 of the fourth series circuit 1320.

In other words, the first step-down converter 1210 is connected via the fourth conductor path 1204 to intermediate node N1130 and to the capacitor C1130 of the first series circuit 1130 of the converter circuit module 1100, to intermediate node N1310 and to the capacitor C1310 of the third series circuit 1310 of the inverter circuit module 1300, and second step-down converter 1220 is connected via the fifth conductor path 1205 to intermediate node N1140 and to the capacitor C1140 of the second series circuit 1140 of the converter circuit module 1100, to intermediate node N1320 and to the capacitor C1320 of the fourth series circuit 1340 of the inverter circuit module 1300.

Moreover, for a reference potential, both the first and the second step-down converters 1210 and 1220 are connected to the third conductor path 1203 being supply with a neutral voltage.

Further, the fist and second step-down converter 1210 and 1220 is connected to the third and fourth input terminal 1103 and 1104 of the converter circuit module 1100, respectively. Accordingly, the first and second step-down converter 1210 and 1220 allows for supplying one of the positive and negative DC power supply voltage, down-converted from a voltage corresponding to the transient energy, into the DC power supply 400. Thereby, the first and second step-down converter 1210 and 1220 realizes the above described first functionality.

According to a more detailed example of the power conversion circuit 1000, the first and second step-down converter 1210 and 1220 is further connected via one of a first and a second diode D1210 and D1220 to one of the first and second conductor path 1201 and 1202, respectively. Accordingly, the first and second step-down converter 1210 and 1220 allows for supplying one of the first and second DC power supply voltage into one of the first and second storage capacitor 1231 and 1232. Thereby, the first and second step-down converter 1210 and 1220 realizes the above described second functionality.

For another more detailed example, the first and the second step-down converter 1210 and 1220 is connected via one of a first and a second switching element S1210 and S1220 to one of first and the second step-down converter 1210 and 1220 of the at least one converter circuit module 1100, respectively, for enabling/disabling the supply of one of the first and second DC power supply voltage into the DC power supply 400.

In case of a combination of the more detailed example introducing diodes D1210 and D1220 and the example introducing switches S1210 and S1220, the first and second step-down converter 1210 and 1220 may alternatively supply DC power supply voltage into the DC power supply 400 and into the storage capacitor.

In more detail, when the respective one of the first and second switching element S1210 and S1220 is in an ON state, the first and the second step-down converter 1210 and 1220 allows feeding-back one of the down-converted first and second DC power supply voltage into one of the third and fourth input terminal 1103 and 1104 of the converter circuit module 1100, and when the respective one of the first and second switch S1210 and S1220 is in an OFF state, allows feeding-back one of the down-converted first and second DC power supply voltage into one of the first or second storage capacitor 1231 and 1232.

In an advantageous realization of the more detailed example, the first and second switching element S1210 and S1220, respectively interconnecting one of the first and the second step-down converter 1210 and 1220 and one of the first and the second step-down converter 1210 and 1220, are realized as electromagnetic relay or as semiconductor switching element including one of a silicon controlled rectifier, SCR, a thyristor, a MOSFET, and an IGBT.

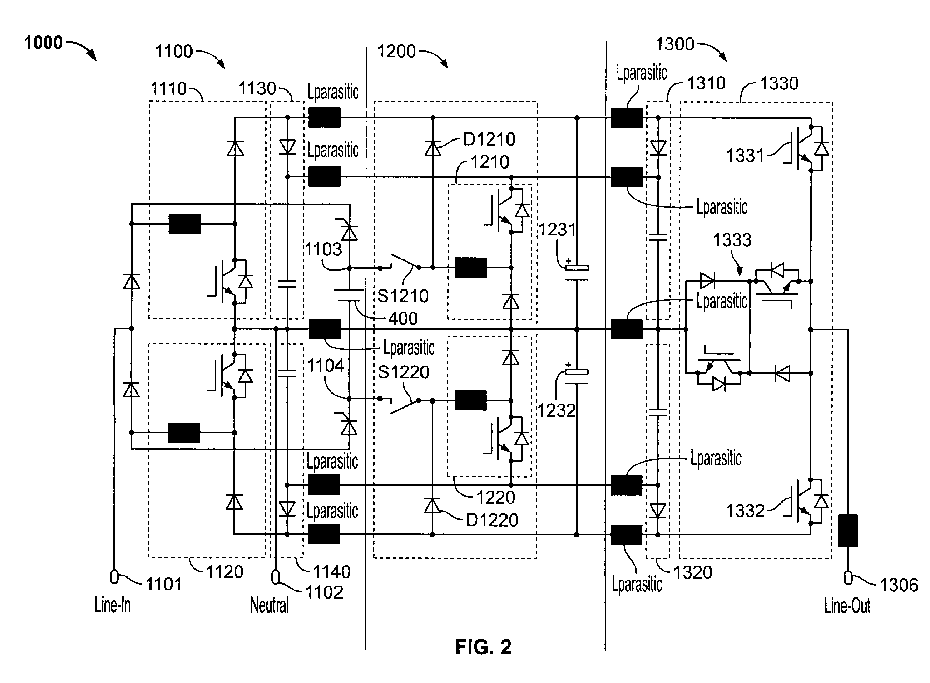

Referring now to Fig. 2, a circuit diagram of the power conversion circuit 1000 according to the first embodiment is shown. The power conversion circuit 1000 of Fig. 2 corresponds to that shown in Fig. 1 and additionally illustrates an exemplary realization of the first and second step-up converter 1110 and 1120, of the three-level inverter circuit 1330 and of the first and second step-down converter 1210 and 1220.

The first and second step-up converter 1110 and 1120 as well as the first and second step-down converter 1210 and 1220 illustrated in Fig. 2 realize the functionality describe with respect to Fig. 1 such that the repetitive description thereof has been omitted. The three-level inverter circuit 1330 of Fig. 2 also implements the functionality described with respect to Fig. 1.

The three-level inverter circuit 1330 also realizes the functionality described with respect to Fig. 1. Specifically, the three-level inverter circuit 1330 illustrated in Fig. 2 includes a positive voltage switching element 1331, a negative voltage switching element 1332 and a neutral point switching element 1333.

The positive voltage switching element 1331 is connected to the first input terminal 1301 and to the output terminal 1306 of the inverter circuit module 1300 for providing a positive voltage at the output terminal 1306; the negative voltage switching element 1332 is connected to the second input terminal 1302 and to the output terminal 1306 of the inverter circuit module 1300 for providing a negative voltage at the output terminal 1306.

The neutral point switching circuit 1333 is coupled between the third input terminal 1303 and the output terminal 1306 of the inverter circuit module 1300 for providing a neutral voltage at the output terminal 1306. In particular, the neutral point switching circuit 1333 includes two series circuits connected in parallel, the first series circuit is composed of a diode and a switching element for switching a current in the direction from the third input terminal 1303 to the output terminal 1306 and the second series circuit is composed of a switching element and a diode for switching a current in the direction from the output terminal 1306 to the third input terminal.

The intermediate node of the first and the second series circuit of the neutral point switching circuit 1333 are interconnected; thereby the switching speed of the neutral point switching circuit 1333 increases, namely the drain terminal of the switching elements is already pre-charged with the neutral voltage.

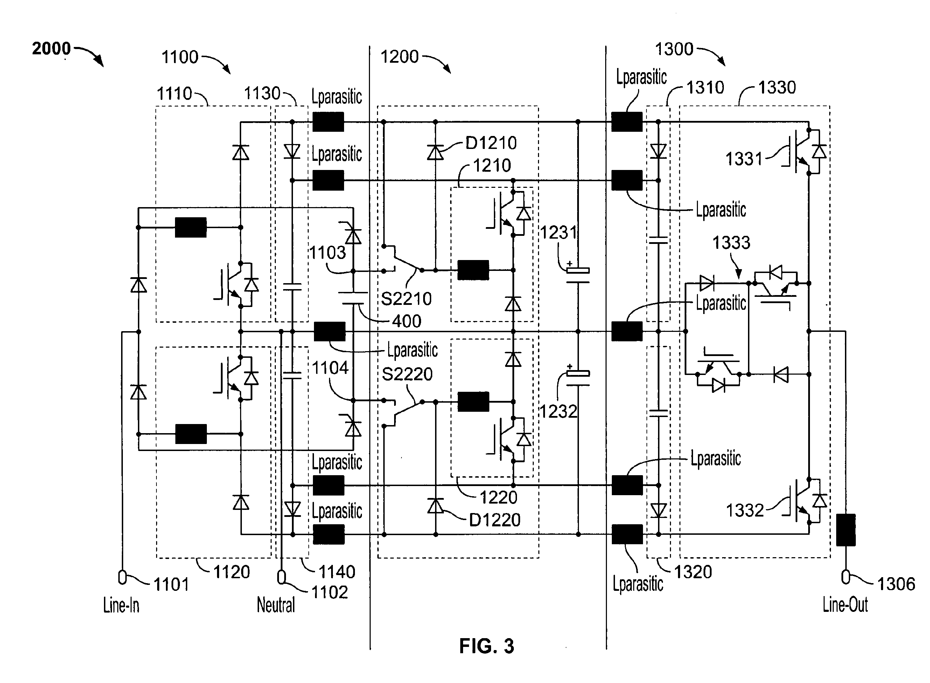

Referring now to Fig. 3, a power conversion circuit 2000 according to another exemplary embodiment of the invention is shown. The power conversion circuit 2000 of this embodiment is based on the power conversion circuit 1000 of Figs. 1 and 2 where corresponding parts are given corresponding reference numerals and terms. The detailed description of corresponding parts has been omitted for reasons of conciseness.

The power conversion circuit 2000 of the second embodiment includes a converter circuit module 1100, an intermediate circuit module 2200 and an inverter circuit module 1300. The converter circuit module 1100 and the inverter circuit module 1300 correspond to that of the first embodiment.

The intermediate circuit module 2200 differs from the intermediate circuit module 1200 in that the first and second switching element S1210 and S1220 has been replaced by a toggle switching element S221 0 and S2220, respectively.

Moreover, the first and the second step-down converter 1210 and 1220 of the intermediate circuit module 2200 is connected via one of the first and a second (toggle) switching element S2210 and S2220 either to one of the third and fourth input terminal 1103 and 1104 or to one of the first and second conductor path 1201 and 1202, respectively. Accordingly, the first and second switching element S2210 and S2220 toggles between a connection to one of the third and fourth input terminal 1103 and 1104 and between a connection to one of the first and second conductor path 1201 and 1202, respectively.

An advantageous combination results in the incorporation of the first and second (toggle) switching element S2210 and S2220 together with the first and a second diode D1210 and D1220 for connecting one of the first and second step-down converter 1210 and 1220 to one of the first and second conductor path 1201 and 1202, respectively. Specifically, the first and second diode D1210 and D1220 result in a fast switching speed whereas the first and second (toggle) switching element S2210 and S2220 provide for higher current carrying capabilities.

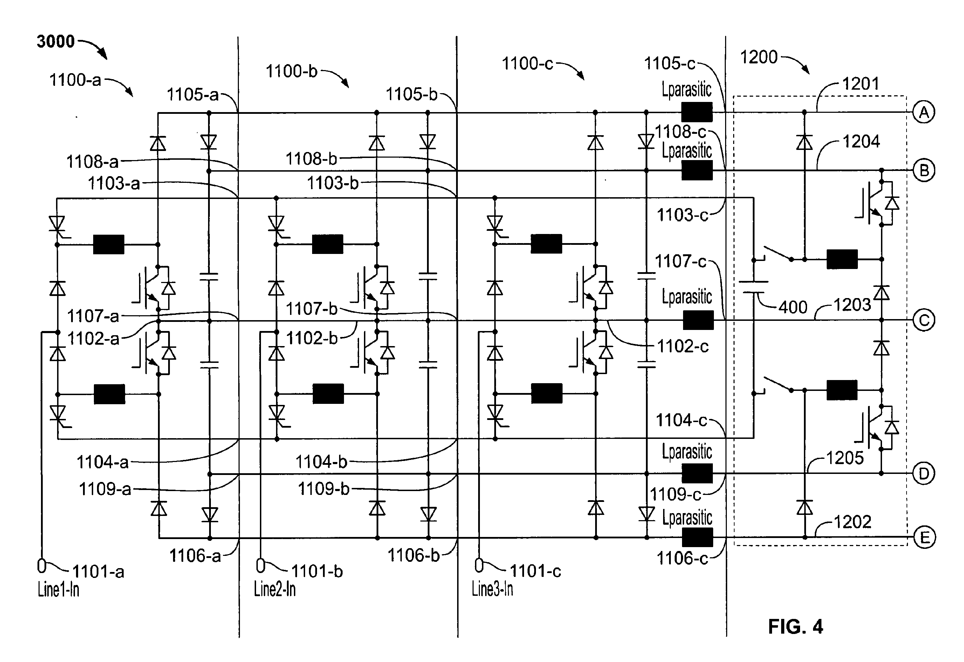

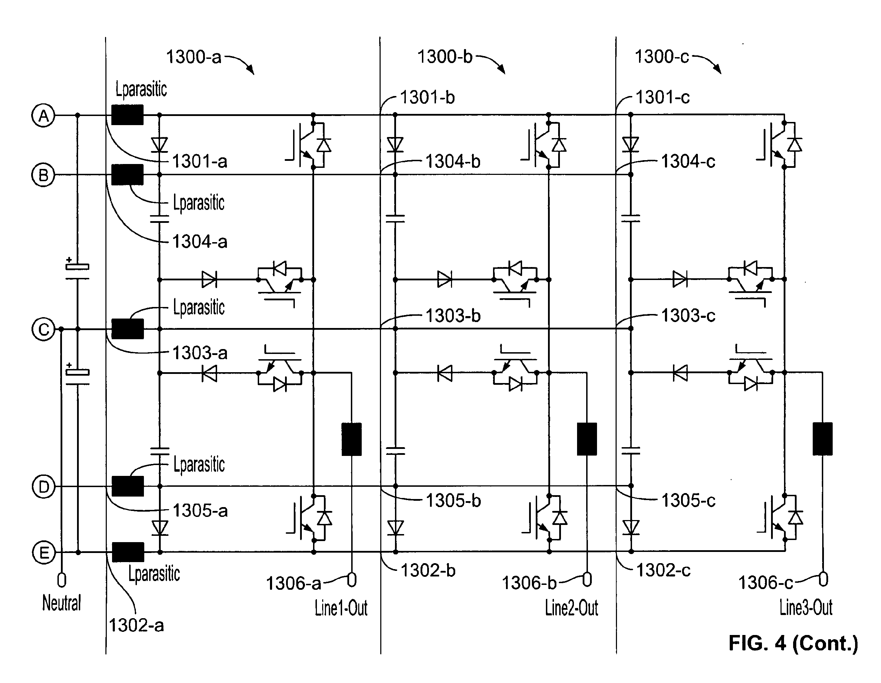

Referring now to Fig. 4, a power conversion circuit 3000 according to another exemplary embodiment of the invention is shown. The power conversion circuit 3000 of this embodiment is based on the power conversion circuit 1000 of Figs. 1 and 2 where corresponding parts are given corresponding reference numerals and terms. The detailed description of corresponding parts has been omitted for reasons of conciseness.

The power conversion circuit 3000 of the third embodiment includes seven modules, namely three converter circuit modules 1100-a, 1100-b, 1100-c, an intermediate circuit module 1200 and three inverter circuit modules 1300-a, 1300-b, 1300-c. The seven modules are connected to each other via respective input/output terminals and in-combination provide for the advantage of minimizing switching losses during operation within an uninterruptible power supply.

Specifically, the three converter circuit modules 1100-a, 1100-b and 1100-c correspond to the converter circuit module 1100 of the first embodiment, wherein the three converter circuit modules 1100-a, 1100-b and 1100-c enable receiving a three-phase AC voltage. Similarly, the three inverter circuit modules 1300-a, 1300-b and 1300-c correspond to the inverter circuit module 1300 of the first embodiment, wherein the three inverter circuit modules 1300-a, 1300-b and 1300-c enable outputting a three-phase AC voltage.

In more detail, the first input terminal 1101-a, 1101-b and 1101-c of each of the three converter circuit modules 1100-a, 1100-b and 1100-c is for connecting a different phase terminal of a three-phase AC power suppl. The second input terminal 1102-a, 1102-b and 1102-c of each of the three converter circuit modules 1100-a, 1100-b and 1100-c is for connecting a neutral terminal of the three-phase AC power supply.

Further, the third and the fourth input terminal 1103-a, ..., 1103-c, 1104-a, ..., 1104-c of each of the three converter circuit modules 1100-a, 1100-b and 1100-c are for respectively connecting one of a positive and negative terminal of the DC power supply 400; and the first, second, third, fourth and fifth output terminal 1105-a, ..., 1109-c of each of the three converter circuit modules 1100-a, 1100-b and 1100-c respectively connect the first, second, third, fourth and fifth conductor path 1201 - 1205 of the intermediate circuit module 1200.

The first, second, third, fourth and fifth input terminal 1301-a, ..., 1305-c of each of the inverter circuit modules 1300-a, 1300-b and 1300-c respectively connect the first, second, third, fourth and fifth conductor path 1201 - 1205 of the intermediate circuit module 1200.

Further, the three-level inverter circuit 1330-a, 1330-b and 1330-c of each of the inverter circuit modules 1300-a, 1300-b and 1300-c is configured for converting the respective up-converted first and second DC-supply voltage and the neutral voltage into one of three different-phase AC voltages, respectively; and for outputting the converted one of the three different-phase AC voltages to the respective output terminal 1306-a, 1306-b and 1306-c of each of the inverter circuit modules 1300-a, 1300-b and 1300-c.

## Claims

1. Power conversion circuit (1000) for use in an uninterruptible power supply, comprising:
at least one converter circuit module (1100) comprising:
- a first input terminal (1101) for connecting a phase terminal of an AC power supply; a second input terminal (1102) for connecting a neutral terminal of the AC power supply; and a third and fourth input terminal (1103, 1104) for respectively connecting one of a positive and negative terminal of a DC power supply (400); and
- a first and a second step-up converter (1110, 1120) for up-converting one of a positive and negative voltage into one of a constant first and second DC-supply voltage having one of a pre-determined positive and negative voltage level, respectively; wherein the positive and negative voltage is received via the first input terminal (1101) as one of a positive and negative part of an AC voltage and/or via the third and fourth input terminal (1103, 1104) as one of a positive and negative part of a DC voltage, respectively;
- a first and a second output terminal (1105, 1106) connected to one of the first and second step-up converter (1110, 1120) for providing one of the up-converted first and second DC-supply voltage, respectively; and a third output terminal (1107) for providing a neutral voltage supplied via the second input terminal (1102);
- a first and a second series circuit (1130, 1140) each composed of a diode and a capacitor, the first and the second series circuit being respectively connected to one of the first and second output terminal (1105, 1106) and both to the third output terminal (1107); wherein the intermediate node (N1130, N1140) of the first and second series circuit (1130, 1140) is connected to one of a fourth and a fifth output terminal (1108, 1109), respectively;
at least one inverter circuit module (1300) comprising:
- a third and a fourth series circuit (1310, 1320) each composed of a diode and a capacitor, the third and fourth series circuit being respectively connected to one of a first and second input terminal (1301, 1302) and both to a third input terminal (1303); wherein the intermediate node (N1310, N1320) of the third and fourth series circuit (1310, 1320) is connected to one of a fourth and fifth input terminal (1304, 1305), respectively;
- a three-level inverter circuit (1330) connected to the first, second and third input terminal (1301 - 1303) for converting the respective up-converted first and second DC-supply voltage and the neutral voltage into an AC voltage and for outputting the converted AC voltage to an output terminal (1306);
an intermediate circuit module (1200) comprising:
- a first, second, third, fourth and fifth conductor path (1201 - 1205) for connecting one of the first, second, third, fourth and fifth output terminal (1104 - 1109) of the at least one converter circuit module (1100) to one of the first, second, third, fourth and fifth input terminals (1301 - 1305) of the at least one inverter circuit module (1300), respectively;
- a first and second storage capacitor (1231, 1232) respectively connected to one of the first and second conductor path (1201, 1202) and both to the third conductor path (1203);
wherein each of the connections between the at least one converter circuit module (1100), the intermediate circuit module (1200) and the at least one inverter circuit module (1300) includes a parasitic inductance,
wherein the first, second, third and fourth series circuit (1130, 1140, 1310 and 1320) are configured such that each of the capacitors thereof temporarily stores, in the capacitor, DC-energy corresponding to the respective up-converted first and second DC-supply voltage, and temporarily stores, in the capacitor, transient energy resulting from the respective of the parasitic inductances; and
wherein the intermediate circuit module (1200) further comprises a first and a second step-down converter (1210, 1220) connected to one of the fourth and fifth conductor path (1204, 1205) for down-converting a voltage corresponding to the transient energy temporarily stored on one of the capacitors of the first, second, third and fourth series circuit (1130, 1140, 1310 and 1320) into one of a first and second DC power supply voltage having one of a pre-determined positive and negative voltage level, respectively; and connected to one of the third and fourth input terminal (1103, 1104) of the at least one converter circuit module (1100) for supplying one of the first and second DC power supply voltage into the DC power supply (400), respectively.

2. The power conversion circuit according to claim 1, wherein the first and the second step-down converter (1210, 1220) is further connected via one of a first and a second diode (D1210, D1220) to one of the first and second conductor path (1201, 1202), respectively, for supplying one of the first and second DC power supply voltage into one of the first and second storage capacitor (1231, 1232).

3. The power conversion circuit according to claim 1 or 2, wherein the first and the second step-down converter (1210, 1220) is connected via one of a first and a second switching element (S1210, S1220) to one of the third and fourth input terminal (1103, 1104) of the at least one converter circuit module (1100), respectively, for enabling/disabling the supply of one of the first and second DC power supply voltage into the DC power supply (400).

4. The power conversion circuit according to claim 3, wherein the first and the second switch (S1210, S1220) is configured to connect one of the first and second step-down converter (1210, 1220) either to one of the third and fourth input terminal (1103, 1104) or to one of the first and second conductor path (1201, 1202), respectively.

5. The power conversion circuit according to one of claims 1 to 4, wherein the third and fourth input terminal (1103, 1104) of the converter circuit module (1100) is connected via one of a third and a fourth switching element (S1110, S1120) to one of the first and second step-up converter (1110, 1120), respectively.

6. The power conversion circuit according to one of claims 3 to 5, wherein each of the first to fourth switching element (S1210, S1220, S1110, S1120) is realized as electromagnetic relay or as semiconductor switching element including one of a silicon controlled rectifier, SCR, a thyristor, a MOSFET, and an IGBT.

7. The power conversion circuit according to one of claims 1 to 6, wherein the three-level inverter circuit (1330) includes:
- a positive voltage switching element (1331) connected to the first input terminal (1301) and to the output terminal (1306) of the inverter circuit module (1300) for providing a positive voltage at the output terminal (1306);
- a negative voltage switching element (1332) connected to the second input terminal (1302) and to the output terminal (1306) of the inverter circuit module (1300) for providing a negative voltage at the output terminal (1306); and
- a neutral point switching circuit (1333) coupled between the third input terminal (1303) and the output terminal (1306) of the inverter circuit module (1300) for providing a neutral voltage at the output terminal (1306).

8. The power conversion circuit according to one of claims 1 to 7, comprising:
three converter circuit modules (1100-a, 1100-b, 1100-c), wherein:
- the first input terminal (1101-a, 1101-b, 1101-c) of each of the three converter circuit modules (1100-a, 1100-b, 1100-c) is for connecting a different phase terminal of a three-phase AC power supply;
- the second input terminal (1102-a, 1102-b, 1102-c) of each of the three converter circuit modules (1100-a, 1100-b, 1100-c) is for connecting a neutral terminal of the three-phase AC power supply;
- the third and the fourth input terminal (1103-a, ..., 1103-c, 1104-a, ..., 1104-c) of each of the three converter circuit modules (1100-a, 1100-b, 1100-c) are for respectively connecting one of a positive and negative terminal of the DC power supply (400); and
- the first, second, third, fourth and fifth output terminal (1105-a, ..., 1109-c) of each of the three converter circuit modules (1100-a, 1100-b, 1100-c) respectively connect the first, second, third, fourth and fifth conductor path (1201 - 1205) of the intermediate circuit module (1200);
three inverter circuit modules (1300-a, 1300-b, 1300-c), wherein:
- the first, second, third, fourth and fifth input terminal (1301-a, ..., 1305-c) of each of the inverter circuit modules (1300-a, 1300-b, 1300-c) respectively connect the first, second, third, fourth and fifth conductor path (1201-1205) of the intermediate circuit module (1200); and
- the three-level inverter circuit (1330-a, 1330-b, 1330-c) of each of the inverter circuit modules (1300-a, 1300-b, 1300-c) is configured for converting the respective up-converted first and second DC-supply voltage and the neutral voltage into one of three different-phase AC voltages, respectively; and for outputting the converted one of the three different-phase AC voltages to the respective output terminal (1306-a, 1306-b, 1306-c) of each of the inverter circuit modules (1300-a, 1300-b, 1300-c).

9. Uninterruptible power supply, comprising: a power conversion circuit according to one of claims 1 to 8, and a DC power supply (400); wherein the positive and negative terminal of the DC power supply respectively connect the third and fourth input terminal (1103, 1104) of each of the at least one converter circuit module (1100).

10. The uninterruptible power supply according to claim 9, wherein the DC power supply is realized as a rechargeable battery.
